# FASCICULE DE BREVET EUROPEEN

(11) **EP 3 105 924 B1**
(45) Date de publication et mention de la délivrance du brevet: **04.08.2021**
(21) Numéro de dépôt: 14824486.6
(22) Date de dépôt: 24.12.2014
(51) Int. Cl.: H04N 9/07

(54) **APPAREIL DE SAISIE D'IMAGES MULTISPECTRALES COMPRENANT UNE ROUE À FILTRES ET PROCÉDÉ**
VORRICHTUNG MIT EINEM FILTERRAD ZUR ERFASSUNG MULTISPEKTRALER BILDER UND VERFAHREN
MULTISPECTRAL IMAGE CAPTURE DEVICE COMPRISING A FILTER WHEEL AND METHOD

(30) Priorité: 14.02.2014 FR 1400409
(43) Date de publication de la demande: 21.12.2016
(73) Titulaire: Airbus Defence and Space SAS, 31402 Toulouse Cedex 4 (FR)
(72) Inventeur: GEORGY, Pierre-Luc, 31500 Toulouse (FR)
(74) Mandataire: Plasseraud IP
(86) Numéro de dépôt international: PCT/EP2014/079332
(87) Numéro de publication internationale: WO 2015/120948

(56) Documents cités:
- GB-A- 852 505
- US-A- 2 304 081
- US-A- 3 603 722
- US-A- 3 715 473
- US-A- 3 821 793
- US-A1- 2012 300 064
- None

## Description

La présente invention concerne un appareil de saisie d'images multispectrales, qui comprend une roue à filtres, ainsi qu'un procédé de collecte d'une image multispectrale.

Plusieurs méthodes existent pour saisir des images multispectrales en utilisant un seul appareil de saisie d'image. L'une d'elles consiste à utiliser plusieurs filtres spectraux qui sont interposés alternativement sur le trajet d'un faisceau lumineux utilisé pour former chaque image qui est saisie. Un tel appareil de saisie d'images multispectrales comprend usuellement :
- une optique de formation d'image, qui est adaptée pour former une image dans un plan focal ;
- au moins un capteur d'image bidimensionnel, comportant une surface photosensible qui est limitée par un contour périphérique, et située dans le plan focal ;
- une roue à filtres, qui comporte une pluralité de filtres spectraux sans recouvrements entre deux filtres voisins ; et
- un système d'entraînement, qui est agencé pour faire tourner la roue autour d'un axe de rotation, de façon à amener chacun des filtres dans le faisceau lumineux.

La roue à filtres est couramment disposée de sorte que les filtres soient amenés dans une pupille de l'optique de formation d'image. Mais il est aussi connu de disposer la roue de façon à maintenir les filtres dans un plan de focalisation du faisceau lumineux. Un tel plan de focalisation peut correspondre à une image intermédiaire qui est formée par l'optique de formation d'image. Dans ce cas, le plan de focalisation est couramment appelé plan d'image intermédiaire. Usuellement, les filtres ne sont pas exactement situés dans le plan d'image intermédiaire, mais à proximité de ce plan, pour éviter qu'un défaut qui est présent sur le filtre apparaisse distinctement dans l'image qui est saisie. Alternativement, le plan de focalisation peut être le plan focal dans lequel se trouve la surface photosensible du capteur d'image. La roue à filtres est alors située à proximité immédiate de la surface photosensible, mais avec un espace intermédiaire pour éviter que les filtres frottent la surface photosensible. Pour de tels appareils existant avant la présente invention, chaque image est saisie par le capteur alors qu'un seul des filtres recouvre toute sa surface photosensible, ou bien recouvre toute une portion du plan d'image intermédiaire qui est conjuguée optiquement avec la surface photosensible entière du capteur d'image. La rotation de la roue amène alors successivement chaque filtre dans cette position.

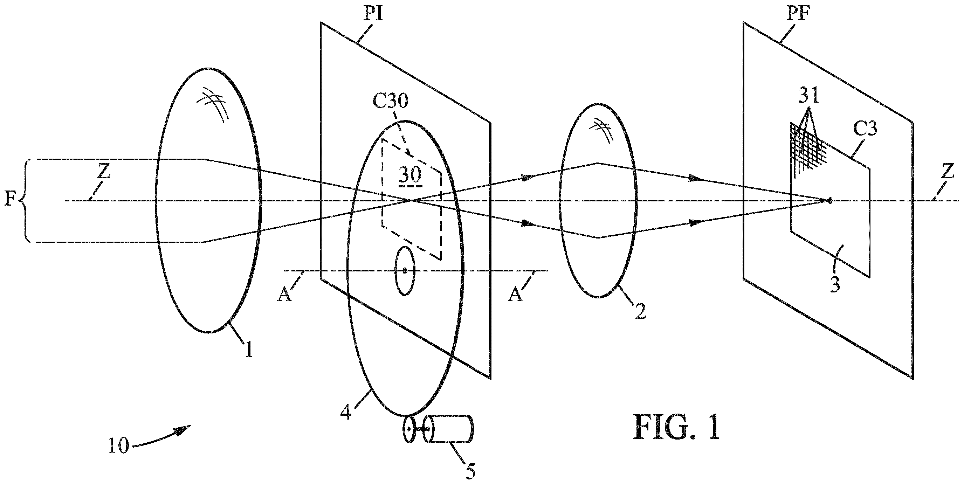

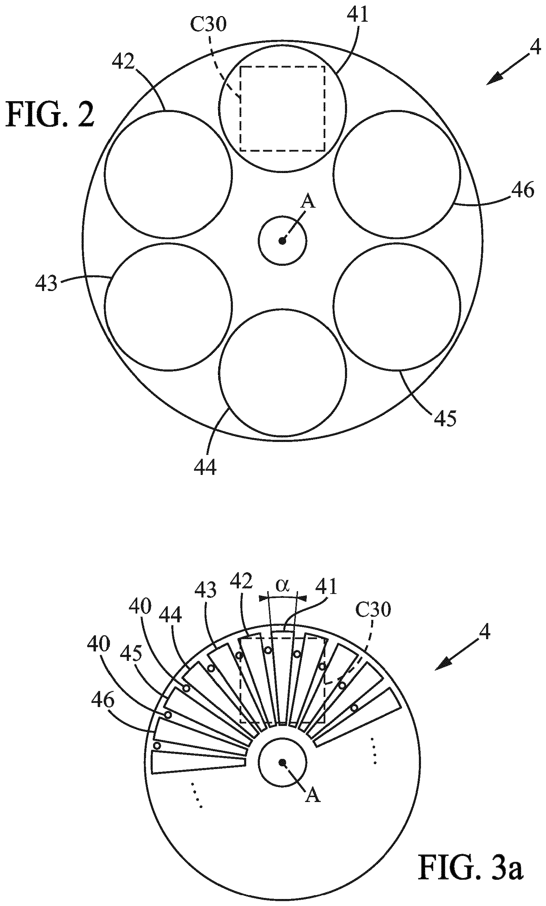

Les figures 1 et 2 illustrent un tel appareil, avec les significations suivantes des références qui sont indiquées dans ces figures :
10 appareil de saisie d'images multispectrales
1 objectif
2 système de ré-imagerie
Z-Z axe optique de l'appareil de saisie d'images multispectrales
F faisceau lumineux formant l'image saisie
3 capteur d'image
31 éléments photosensibles du capteur d'image 3, correspondant aux points d'image qui sont acquis individuellement lors de chaque exposition du capteur d'image
C3 contour périphérique de la surface photosensible du capteur d'image 3
PF plan focal de l'optique de formation d'image, dans lequel est placée la surface photosensible du capteur d'image 3
PI plan d'image intermédiaire, qui constitue un plan de focalisation pour le faisceau lumineux F, supplémentaire par rapport au plan focal PF
30 portion du plan d'image intermédiaire PI qui est conjuguée optiquement par le système de ré-imagerie 2 avec la surface photosensible entière du capteur d'image 3
C30 limite périphérique de la portion 30 du plan d'image intermédiaire PI
4 roue à filtres
A-A axe de rotation de la roue à filtres 4
5 système d'entraînement en rotation de la roue 4
41-46 filtres spectraux portés par la roue 4, par exemple au nombre de six

L'objectif 1 et le système de ré-imagerie 2 constituent ensemble l'optique de formation d'image. Cette optique peut être centrée le long de l'axe optique Z-Z. Pour une telle constitution de l'optique de formation d'image, l'objectif 1 forme une image intermédiaire, dans le plan PI, d'une scène qui est contenue dans le champ d'entrée de cette optique, puis le système de ré-imagerie 2 forme à son tour, à partir de cette image intermédiaire, l'image finale dans le plan focal PF, qui est saisie par le capteur 3. Le contour périphérique C3 de la surface photosensible du capteur 3 est conjugué optiquement par le système de ré-imagerie 2 avec la limite C30 à l'intérieur du plan d'image intermédiaire PI. La roue 4 est disposée à proximité du plan d'image intermédiaire PI, avec l'axe de rotation A-A de la roue qui est parallèle à l'axe optique Z-Z. Dans les appareils connus avant la présente invention, l'un des filtres 41-46 recouvre entièrement la portion 30 du plan intermédiaire PI qui est située à l'intérieur de la limite C30, pour certaines positions prédéterminées de la roue 4 autour de l'axe A-A. La figure 2 montre la roue 4 dans la position où le filtre 41 est actif pour l'image qui est saisie par le capteur 3. Des rotations adéquates de la roue 4 permettent de remplacer le filtre 41 dans cette position par l'un des autres filtres 42-46. Ainsi, six images peuvent être saisies successivement de la même scène qui est contenue dans le champ d'entrée de l'optique de formation d'image, pour constituer une image multispectrale de cette scène à six composantes spectrales.

Dans la suite de la présente description, on appelle image un ensemble de valeurs de lecture des éléments photosensibles 31, qui résulte d'une seule exposition de tous les éléments photosensibles 31 du capteur d'image 3. Le terme d'image spectrale est réservé pour désigner chaque composante spectrale d'une image multispectrale. Dans un appareil de saisie d'images multispectrales qui est conforme aux figures 1 et 2, chaque image est directement une image spectrale.

Mais un tel appareil de saisie d'images multispectrales présente les inconvénients suivants :
- la surface de chaque filtre est assez grande, et il est d'autant plus difficile et onéreux de produire un filtre de qualité optique suffisante, exempt de défauts ponctuels et homogène quant à sa caractéristique de filtrage, que sa surface est grande ;
- la durée d'acquisition d'une image multispectrale complète, constituée de plusieurs saisies d'images spectrales pour des positions différentes de la roue à filtres, ne peut pas être réduite en deçà d'une durée minimale qui est imposée par la vitesse de rotation de la roue à filtres. Mais utiliser un système d'entraînement qui est plus rapide, et donc plus puissant, provoque des vibrations plus importantes qui sont gênantes par ailleurs ;
- le nombre des filtres qui sont disposés dans la roue est limité par la taille de celle-ci, et une roue plus grande nécessite aussi d'augmenter la puissance du système d'entraînement, pour tourner la roue avec une vitesse angulaire qui reste identique ;
- la saisie d'images à haute définition nécessite d'utiliser des capteurs dont la surface photosensible est plus grande. Les filtres doivent alors eux-mêmes être plus grands, et par conséquent de même pour la roue qui les maintient ;
- la saisie d'images à haute définition nécessite encore plus de réduire les vibrations de l'appareil, et notamment celles qui sont produites par le système d'entraînement en rotation de la roue à filtres. Un tel impératif apparaît donc contraire à l'augmentation de la puissance du système d'entraînement ;
- l'évolution des missions d'imagerie multispectrale, notamment dans le domaine de l'imagerie spatiale, est vers une augmentation du nombre des filtres ; et
- la durée totale de saisie d'une image multispectrale est recherchée la plus courte possible, à la fois pour augmenter la fréquence de saisie d'images multispectrales, pour réduire des artéfacts causés par le bougé de l'appareil, ou par des éléments mobiles qui sont présents dans la scène acquise.

US 3,715,473 et US 2,304,081 divulguent des appareils de saisie d'images qui comprennent des roues à filtres.

A partir de cette situation et des nouveaux besoins en matière d'imagerie multispectrale, la présente invention a pour but de réduire les inconvénients et les limitations précitées des appareils antérieurs.

Plus particulièrement, un premier but de l'invention consiste à augmenter le nombre des filtres qui sont portés par la roue, sans augmenter la taille de la roue autant que pour une roue à filtres telle que connue de l'art antérieur.

Un second but particulier de l'invention est de permettre une rotation plus rapide de la roue à filtres, sans augmenter significativement la puissance de son système d'entraînement.

Un troisième but particulier de l'invention est de permettre de saisir plus rapidement des images multispectrales successives.

Enfin, un quatrième but de l'invention est de réduire la durée effective entre les instants de saisie de deux images spectrales qui sont parties d'une même image multispectrale, afin de réduire des artéfacts de couleur qui apparaissent pour des objets en déplacement dans le champ d'entrée de l'optique de formation d'image.

Pour atteindre l'un au moins de ces buts ou d'autres, un premier aspect de l'invention propose de modifier un appareil de saisie d'images multispectrales tel que rappelé plus haut, dans lequel les filtres sont maintenus par la roue parallèlement à et à proximité du plan focal ou du plan d'image intermédiaire de l'optique de formation d'image. D'après les modifications qui sont introduites par l'invention, l'un au moins des filtres, appelé filtre à secteur angulaire étroit, possède une extension angulaire qui est inférieure à l'extension angulaire de la surface photosensible du capteur d'image lorsque les filtres sont à proximité du plan focal. Alternativement, l'extension angulaire du filtre à secteur angulaire étroit est inférieure à celle d'une portion du plan d'image intermédiaire qui est conjuguée optiquement avec la surface photosensible entière par la partie ré-imageante de l'optique de formation d'image. Pour cela, les extensions angulaires sont mesurées par rapport à l'axe de rotation de la roue.

Autrement dit, l'un au moins des filtres qui est porté par la roue ne couvre pas tout le champ optique du capteur d'image lorsqu'une image est saisie. La surface de ce filtre est ainsi réduite, si bien que sa fabrication est facilitée et son coût est réduit, pour une même exigence de qualité optique du filtre. En effet, il est plus facile de fabriquer des filtres aux tailles réduites, qui soient dépourvus de défauts ponctuels, de défauts de planéité et d'inhomogénéités de filtrage spectral, par rapport à des filtres qui recouvrent chacun tout le champ optique du capteur d'image.

Préférentiellement, le filtre à secteur angulaire étroit peut être situé dans la roue entre deux autres des filtres, et proche de ceux-ci de sorte que pour toute position de la roue autour de l'axe de rotation telle qu'une portion au moins du filtre à secteur angulaire étroit soit efficace pour une partie de l'image contenue à l'intérieur du contour périphérique de la surface photosensible du capteur d'image, alors une portion de l'un au moins des deux autres filtres est simultanément efficace pour une autre partie de la même image contenue à l'intérieur du contour périphérique de la surface photosensible. Autrement dit, des portions de plusieurs filtres sont situées simultanément à l'intérieur du champ optique du capteur d'image. L'image qui est saisie lors d'une exposition du capteur contient donc une partie de cette image qui est saisie à travers l'un des filtres, et aussi au moins une autre partie de cette même image qui est saisie à travers un autre des filtres. Une image spectrale complète, qui est filtrée de façon uniforme par un seul des filtres, peut être reconstruite en réunissant les parties d'images qui sont relatives à ce filtre, et qui ont été saisies lors d'exposition successives du capteur d'image.

Préférablement, l'extension angulaire du filtre à secteur angulaire étroit et les extensions angulaires respectives des deux autres filtres peuvent être telles que pour au moins une position de la roue autour de l'axe de rotation, des portions respectives du filtre à secteur angulaire étroit et des deux autres filtres sont simultanément efficaces pour trois parties séparées de l'image contenue à l'intérieur du contour périphérique de la surface photosensible. Plus généralement, il peut être préférable que des portions respectives d'un nombre plus grand de filtres soient simultanément dans le champ optique du détecteur, afin de réduire la taille individuelle de chaque filtre. En outre, les filtres sont avantageusement rapprochés les uns des autres dans la roue, avec des zones de la roue qui sont minimales entre deux filtres voisins, pour réduire la partie du champ optique du capteur d'image qui est masquée par les zones de la roue qui sont dépourvues de filtre, lors de chaque exposition.

Une telle disposition des filtres permet de les rapprocher de l'axe de rotation de la roue, si bien que la roue peut être moins grande et plus légère. A puissance égale du système d'entraînement en rotation de la roue, celle-ci peut tourner plus vite, ou bien le système d'entraînement en rotation peut être réduit en conservant une vitesse identique de rotation de la roue à filtres.

Dans des modes simples de réalisation de l'invention, les extensions angulaires respectives du filtre à secteur angulaire étroit et des deux autres filtres qui sont voisins avec lui dans la roue, par rapport à l'axe de rotation de la roue et pour une même distance radiale à partir de cet axe de rotation, peuvent être égales.

Les exemples où le système d'entraînement peut être adapté pour amener la roue à des positions successives autour de l'axe de rotation, et pour l'immobiliser dans chacune de ces positions pendant au moins une durée d'exposition du capteur d'image ne font pas pas partie de l'invention telle que revendiquée par les revendications 1-16.

Dans les réalisations de l'invention, le système d'entraînement peut être adapté pour faire tourner la roue continûment pendant que plusieurs images sont successivement saisies par le capteur d'image. Dans ce cas, et lorsque le capteur d'image comporte une pluralité d'éléments photosensibles séparés et adaptés pour fonctionner chacun selon une séquence d'acquisition qui comprend successivement au moins une phase d'accumulation de signal et une phase de lecture d'un signal accumulé, l'extension angulaire du filtre à secteur angulaire étroit peut être avantageusement supérieure à un angle de rotation qui est parcouru par la roue pendant la somme d'une durée totale de la séquence d'acquisition et d'une durée de phase d'accumulation supplémentaire. Ainsi, chaque élément photosensible du capteur d'image peut effectuer individuellement au moins une séquence complète d'acquisition de valeur de point d'image, pendant que cet élément est exposé au faisceau lumineux à travers le filtre à secteur angulaire étroit.

Dans diverses réalisations de l'invention, les perfectionnements suivants peuvent être mis en œuvre, séparément ou en combinant plusieurs d'entre eux :
- le filtre à secteur angulaire étroit peut posséder deux bords rectilignes qui s'étendent chacun radialement par rapport à l'axe de rotation de la roue. Son découpage est alors facilité, dans une plaque de filtre plus grande qui est produite initialement ;
- la roue peut être pourvue d'au moins trois filtres correspondant respectivement à trois fenêtres spectrales de filtrage qui sont différentes ;
- les filtres peuvent constituer plusieurs groupes identiques. Dans ce cas, les filtres d'un même groupe peuvent être tous voisins dans la roue de sorte que chaque groupe de filtres est rassemblé dans un secteur de la roue sans intercalation d'un filtre qui appartiendrait à un autre groupe ;
- l'appareil peut comprendre en outre un système de repérage de la position de la roue autour de l'axe de rotation ;
- la roue peut comporter un motif entre deux des filtres qui sont voisins, de sorte qu'une position de ce motif apparaisse dans une image qui est saisie alors que des portions respectives de ces deux filtres voisins sont simultanément efficaces pour des parties séparées de l'image contenue à l'intérieur du contour périphérique de la surface photosensible du capteur d'image ; et
- le système d'entraînement et un contrôleur du capteur d'image peuvent être adaptés pour que deux images qui sont saisies successivement par le capteur présentent un recouvrement entre des parties respectives de ces images qui sont saisies à travers un même des filtres.

L'appareil peut être comprendre une unité de reconstruction d'images spectrales, adaptée pour produire des images spectrales qui correspondent chacune à la surface photosensible entière du capteur d'image, chaque image spectrale étant produite comme une juxtaposition de portions d'images qui sont saisies par le capteur d'image à travers un même des filtres lors d'au moins deux expositions différentes, avec une rotation de la roue entre ces expositions. Une telle unité de reconstruction peut être située à proximité du capteur d'image, avec une connexion matérielle qui les relie l'un à l'autre. Alternativement, l'unité de reconstruction des images spectrales peut être éloignée du capteur d'image avec un système de transmission sans fil qui est prévu pour transmettre les données d'image entre le capteur d'image et l'unité de reconstruction.

Un appareil qui est conforme à l'invention peut notamment être utilisé pour une application d'imagerie spatiale. Dans ce cas, il peut être adapté pour être embarqué à bord d'un aéronef, d'un véhicule spatial ou d'un satellite.

Un appareil peut être adapté pour obtenir des images colorisées. Une telle image colorisée est construite en combinant une image panchromatique, c'est-à-dire qui a été saisie avec une large fenêtre spectrale, avec des images qui ont été saisies avec des fenêtres spectrales étroites et comprises dans la fenêtre large. Pour cela, trois des filtres qui sont portés par la roue et qui correspondent respectivement à trois fenêtres spectrales de filtrage différentes, sont le filtre à secteur angulaire étroit et les dits deux autres filtres déjà mentionnés plus haut. La roue comporte alors au moins un filtre spectral supplémentaire qui possède une fenêtre spectrale large comprenant celles du filtre à secteur angulaire étroit et des dits deux autres filtres. Ce filtre spectral supplémentaire possède lui-même une extension angulaire qui est supérieure à l'extension angulaire de la surface photosensible du capteur d'image lorsque les filtres sont à proximité du plan focal, ou qui est supérieure à l'extension angulaire de la portion du plan d'image intermédiaire qui est conjuguée optiquement avec la surface photosensible entière par la partie ré-imageante de l'optique de formation d'image, l'extension angulaire du filtre spectral supplémentaire étant aussi mesurée par rapport à l'axe de rotation de la roue. Le filtre spectral supplémentaire est le filtre panchromatique, et chaque image panchromatique peut ainsi être saisie lors d'une unique séquence d'acquisition qui est exécutée par le capteur d'image alors que la roue est immobilisée.

Un second aspect de l'invention propose un procédé de collecte d'une image multispectrale, qui comprend de recevoir à une station installée sur Terre, des données d'images relatives à des images saisies par un appareil conforme au premier aspect de l'invention, cet appareil étant à bord d'un aéronef en vol, d'un véhicule spatial situé dans l'espace ou d'un satellite en orbite lorsque les images ont été saisies. Les données d'images sont alors transmises par rayonnement électromagnétique ou par signaux laser à partir de l'aéronef, véhicule spatial ou satellite à la station sur Terre.

Un tel procédé de collecte peut comprendre l'étape de reconstruction des images spectrales qui forment ensemble l'image multispectrale. Pendant cette étape de reconstruction, chaque image spectrale correspondant à la surface photosensible entière du capteur d'image, est produite comme une juxtaposition des parties d'images qui sont saisies par le capteur d'image à travers un même des filtres lors d'au moins deux expositions différentes, avec une rotation de la roue entre ces expositions. Une telle étape de reconstruction peut être réalisée à bord de l'aéronef, du véhicule spatial ou du satellite, mais elle peut être préférentiellement réalisée sur Terre à partir des données d'images qui sont reçues à la station.

Enfin, pour l'obtention d'images colorisées, la roue est équipée d'un filtre panchromatique en plus des trois filtres à fenêtres spectrales étroites introduits plus haut selon l'invention. Le procédé comprend alors en outre une étape de colorisation lors de laquelle des images spectrales qui ont été saisies respectivement à travers le filtre à secteur angulaire étroit et les dits deux autres filtres sont combinées avec une image qui a été saisie avec le filtre spectral supplémentaire. Ainsi une image enrichie est obtenue, dite colorisée, qui possède une information spectrale qui est directement visible pour un observateur de cette image enrichie.

D'autres particularités et avantages de la présente invention apparaîtront dans la description ci-après d'exemples de réalisation non limitatifs, en référence aux dessins annexés, dans lesquels :
- la figure 1, déjà décrite, représente symboliquement un appareil de saisie d'images multispectrales tel que connu avant l'invention, et qui peut être modifié conformément à la présente invention ;
- la figure 2, déjà décrite, représente une roue à filtres telle que connue avant la présente invention ;
- les figures 3a à 3d représentent quatre roues à filtres conformes à la présente invention ; et
- la figure 4 illustre une utilisation possible d'un appareil de saisie d'images multispectrales conforme à l'invention

Pour raison de clarté, les dimensions des éléments qui sont représentés dans ces figures ne correspondent ni à des dimensions réelles ni à des rapports de dimensions réels. En outre, des références identiques qui sont indiquées dans des figures différentes désignent des éléments identiques ou qui ont des fonctions identiques.

Dans un appareil de saisie d'images multispectrales 10 tel que représenté sur la figure 1, la roue à filtres de la figure 2 peut être remplacée par l'une des roues des figures 3a à 3c, pour appliquer l'invention.

Il est entendu que bien que l'objectif 1 et le système de ré-imagerie 2 soient représentés chacun sous forme d'une lentille unique, ils peuvent avoir des constitutions quelconques, à base d'une ou plusieurs lentilles, d'un ou plusieurs miroirs, ou possiblement d'une combinaison d'au moins une lentille et d'au moins un miroir.

Par exemple, la roue 4 de la figure 3a peut être utilisée dans l'appareil de la figure 1. Elle comporte plusieurs filtres référencés 41,...46,..., qui sont efficaces en transmission et qui peuvent avoir des formes de découpage qui sont identiques. Chaque filtre peut occuper un secteur angulaire qui est compris entre deux rayons issus de l'axe de rotation A-A, et être compris entre un moyeu de la roue 4 et un bord périphérique circulaire de celle-ci. La largeur du secteur angulaire de chaque filtre, qui est notée α sur la figure 3a, peut être inférieure à 15° (degré), voire inférieure à 10°, par exemple égale à 4° environ. En outre, deux filtres voisins peuvent être rapprochés angulairement l'un de l'autre, autant que possible en fonction du mode de maintien des filtres sur la roue, mais sans recouvrement entre eux.

Dans un tel mode de réalisation de l'invention, au moins deux des filtres 41,...46,... sont toujours superposés simultanément avec la portion 30 du plan PI, qui correspond à l'image telle que saisie par le capteur 3. Une telle superposition est illustrée dans les figures 3a à 3c en indiquant la limite C30 qui est conjuguée avec le contour périphérique C3 de la surface photosensible du détecteur 3.

Plusieurs modes de saisie d'une image multispectrale peuvent être utilisés alternativement, en fonction des commandes qui sont appliquées au système d'entraînement 5 et au capteur d'image 3.

Selon un premier fonctionnement d'un appareil non couvert par l'invention telle que revendiquée par les revendications 1-16, la roue 4 peut être immobilisée pendant que chaque image est saisie par le capteur 3, et tournée entre deux saisies d'images successives. Pour cela, les images doivent être saisies avec des périodes respectives d'exposition du capteur d'image qui sont séparées dans le temps. Alors, des parties d'images qui appartiennent à deux images saisies successivement, en correspondant à un même des filtres, peuvent avantageusement présenter un recouvrement par rapport à la scène observée. Pour cela, la rotation de la roue 4 entre les deux images est inférieure à la largeur α de chacun des secteurs angulaires occupés par les filtres 41-46. Grâce à de tels recouvrements, les parties d'images qui sont associées à un même filtre, en étant issues d'images saisies séparément, peuvent être réunies facilement sous forme d'une image spectrale continue. Celle-ci forme alors l'une des composantes de l'image multispectrale. Typiquement, les recouvrements peuvent avoir eux-mêmes une largeur angulaire individuelle qui est inférieure à un dixième de la largeur a. La rotation de la roue 4 entre deux expositions successives du capteur d'image 3, est inférieure à celle qui est nécessaire avec une roue à filtres telle que représentée sur la figure 2. Les deux expositions successives de l'ensemble du capteur d'image 3 peuvent ainsi être exécutées avec un temps d'attente intermédiaire qui est plus court, si bien que l'image multispectrale est globalement acquise plus rapidement. Cette durée globale d'acquisition qui est réduite pour l'image multispectrale complète, est particulièrement avantageuse lorsque l'appareil et la scène observée sont en mouvement l'un par rapport à l'autre. Une telle situation existe en particulier pour des images de la Terre qui sont saisies à partir d'un satellite non-géostationnaire, par exemple un satellite en orbite basse.

Par ailleurs, il peut être utile de connaître ou de confirmer lequel des filtres 41-46 est efficace pour chaque partie d'une image telle que saisie par le capteur 3. Une première possibilité pour cela consiste à utiliser un système additionnel de repérage de la position angulaire de la roue 4. De tels systèmes sont bien connus de l'Homme du métier. Ils peuvent être intégrés dans le système d'entraînement 5, ou bien séparés de celui-ci. Une autre possibilité consiste à ajouter des motifs 40 sur la roue 4, à des endroits de la roue qui sont situés entre filtres voisins. Etant donné que la roue 4 est proche du plan d'image intermédiaire PI, chaque motif 40 peut apparaître distinctement dans l'image qui est saisie par le capteur 3, lorsque la roue 4 est dans une position telle que ce motif se trouve dans le champ optique du capteur 3. A l'intérieur de l'image saisie, le motif 40 permet d'identifier précisément la position de la roue 4, et de déterminer quel filtre a été efficace dans chaque partie de l'image. Par exemple, chaque motif 40 peut être un trou qui est percé dans la roue 4, à une distance radiale mesurée à partir de l'axe A-A qui varie en fonction des deux filtres qui sont voisins de ce motif (voir la figure 3a).

Selon le fonctionnement d'un appareil selon l'invention, la roue 4 peut être entraînée continûment en rotation, avec une vitesse angulaire qui peut être constante, mais pas nécessairement. Un tel fonctionnement continu réduit les vibrations qui sont générées par la roue 4 et son système d'entraînement 5. Dans ce cas, pour chaque image qui est saisie par le capteur 3, certains éléments photosensibles 31 du capteur 3 peuvent n'avoir été exposés que partiellement au faisceau lumineux F à travers l'un des filtres. Autrement dit, un bord d'un des filtres 41-46, qui est parallèle à une direction radiale de la roue 4, peut avoir empiété sur la section d'entrée du flux lumineux dans l'un des éléments photosensibles 31 pendant la phase d'accumulation de cet élément. La mesure du flux lumineux qui est ensuite produite par cet élément photosensible 31 est perturbée, voire n'est pas significative. Il peut alors être avantageux de limiter la vitesse de rotation de la roue 4 pour que chaque élément photosensible 31 puisse produire valablement au moins une mesure de flux lumineux à chaque passage d'un des filtres 41-46 dans le champ optique individuel de cet élément, sans qu'un bord du filtre n'empiète sur ce champ individuel. La situation la plus défavorable se produit lorsqu'un bord d'un filtre qui arrive nouvellement empiète dans le champ optique d'un des éléments 31 juste après que cet élément a commencé une nouvelle séquence d'acquisition. Chaque filtre peut être suffisamment étendu angulairement pour que l'élément 31 puisse finir la séquence d'acquisition déjà entamée, puis exécuter complètement la phase d'accumulation de la séquence d'acquisition suivante, avant que le bord de fin du filtre n'arrive à son tour dans le champ optique de l'élément 31. Autrement dit, la largeur α du secteur angulaire qui est occupé par le filtre est avantageusement supérieure à l'angle de rotation qui est parcouru par la roue 4 pendant une durée égale à la somme de la durée totale de la séquence d'acquisition à finir, et de la durée de la phase d'accumulation de la séquence d'acquisition suivante. De façon connue, le fonctionnement d'acquisition d'un élément photosensible du capteur d'image comprend une phase d'accumulation lors de laquelle un signal électrique est accumulé proportionnellement au flux lumineux qui est reçu pendant une durée d'accumulation fixée, puis une phase de lecture pendant laquelle l'amplitude du signal accumulé est détectée, puis l'élément photosensible est réinitialisé. Toutefois, il n'est pas indispensable que tous les éléments photosensibles 31 soient exposés à travers chacun des filtres pendant une phase d'accumulation complète à chaque tour de la roue 4. Ceux des éléments photosensibles qui ont été valablement exposés au faisceau lumineux F peuvent être sélectionnés, et seulement les signaux de lecture qui ont été produits par les éléments photosensibles de cette sélection peuvent être conservés. Ceux des éléments photosensibles 31 qui n'ont pas été exposés valablement à travers l'un des filtres pendant un tour de la roue 4, seront préférentiellement exposés en priorité à travers ce filtre lors d'un tour ultérieur de la roue, ou lors d'un passage ultérieur de la roue avec un filtre de même caractéristique spectrale. Eventuellement, un ordre chronologique de commande des éléments photosensibles peut être adopté, pour que certains au moins des éléments photosensibles exécutent la séquence d'acquisition d'une façon qui est synchronisée par rapport aux transitions entre les filtres.

Les motifs 40 pour repérer la position angulaire de la roue 4 peuvent encore être utilisés lorsqu'une rotation continue est imposée par le système d'entraînement 5.

Comme pour le mode de fonctionnement avec arrêt de la roue 4 lorsqu'une image est saisie, il peut être avantageux, aussi lorsque la rotation de la roue 4 est continue pendant que plusieurs images sont saisies à la suite, que les parties d'images qui sont relatives à un même filtre mais qui appartiennent à des images saisies successivement, aient entre elles des recouvrements.

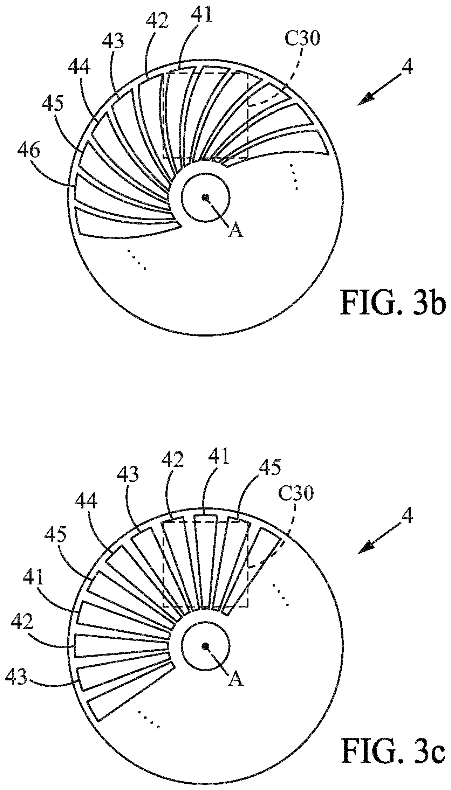

Dans la roue à filtres de la figure 3a, chacun des filtres 41-46 possède deux bords rectilignes qui s'étendent radialement dans la roue 4. La figure 3b montre une autre configuration pour la roue à filtres qui est compatible avec l'invention. Cette autre configuration peut être déduite de celle de la figure 3a, en appliquant à la roue une déformation par rotation autour de l'axe A-A, avec une amplitude de rotation qui est variable en fonction de la distance radiale mesurée à partir de l'axe A-A. La roue à filtres de la figure 3b est obtenue de cette façon, avec une amplitude de déformation par rotation qui croît progressivement en fonction de la distance radiale.

Dans les roues à filtres des figures 3a et 3b, tous les filtres peuvent être différents, c'est-à-dire qu'ils correspondent à des fenêtres spectrales de transmission qui sont différentes les unes des autres. Selon une alternative de réalisation de l'invention, des filtres identiques peuvent être répétés de façon cyclique autour de l'axe de rotation A-A dans une même roue. Par exemple, la série ordonnée des filtres 41 à 45 est répétée dans la roue de la figure 3c, progressivement en tournant autour de l'axe A-A.

Pour les deux fonctionnements de saisie d'images qui ont été décrits plus haut, avec arrêt de la roue 4 pendant chaque exposition du capteur 3 ou bien en tournant continûment la roue 4 pendant que plusieurs acquisitions sont réalisées, les images spectrales sont ensuite reconstruites à partir des images acquises par le capteur 3. Pour cela, pour chacun des filtres 41-46, des parties d'images qui correspondent à ce filtre sont prélevées dans les images acquises successivement par le capteur 3. Ces parties d'image sont alors réunies dans une seule image spectrale qui correspond à ce filtre. Cette image spectrale recouvre préférablement la totalité du champ optique du capteur 3, sans bandes qui manqueraient entre deux parties d'image voisines. Pour garantir que chaque image spectrale soit ainsi complète, il est avantageux de prévoir les recouvrements entre parties d'images qui ont déjà été décrits.

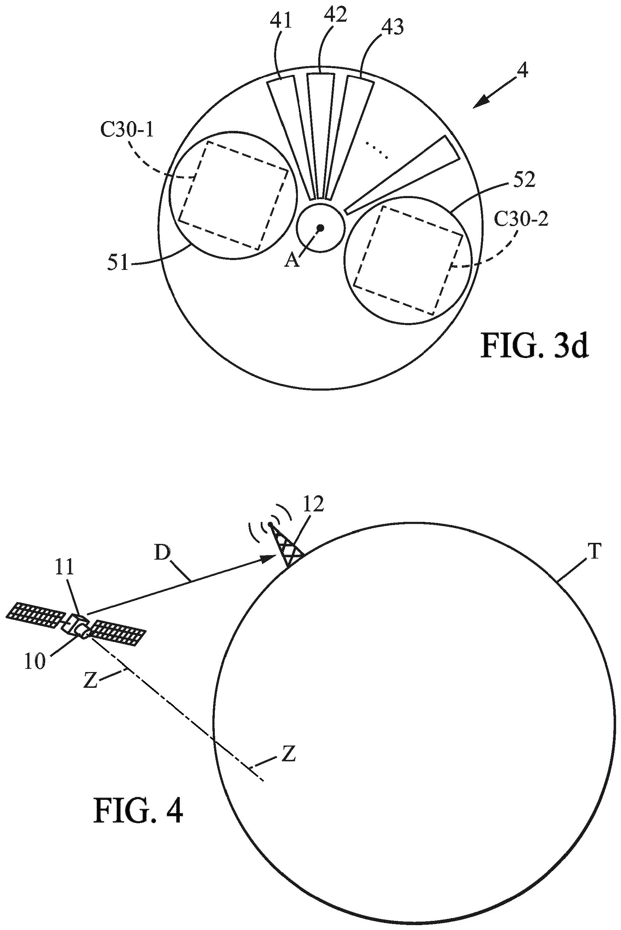

Conformément à la figure 4, l'appareil de saisie d'images multispectrales 10 peut être embarqué à bord d'un satellite 11 qui est en orbite autour de la Terre, notée T. L'axe optique Z-Z de l'appareil 10 est pointé en direction de la zone de la surface terrestre que l'on veut observer. Les données d'images, notées D sur la figure, qui sont produites par le capteur d'image à chaque exposition sont transmises à une station de réception 12 sur Terre, soit directement soit par l'intermédiaire d'un satellite de relais. L'un des modes connus pour transmettre de telles données à travers l'atmosphère terrestre peut être utilisé, tel que la transmission radio ou la transmission par signaux laser. La reconstruction des images spectrales est effectuée par une unité dédiée qui peut être alternativement embarquée à bord du satellite 11, ou située sur Terre. Cette seconde solution peut être préférée, pour réduire la charge et la consommation énergétique du satellite 11. Dans ce cas, les données D qui sont transmises entre le satellite 11 et la station de réception 12 concernent les images telles que saisies par le capteur 3.

Par exemple, pour une mission de surveillance depuis l'espace, notamment à partir d'un satellite géostationnaire, une roue à filtres qui est conforme à l'invention et à la figure 3d peut être utilisée. Les références 41 à 43 désignent encore des filtres à secteur angulaire étroit, correspondant chacun à une fenêtre spectrale de transmission qui est étroite. Pour cette raison, les filtres 41-43 sont dits monochromatiques. Par exemple, le filtre 41 transmet la couleur bleue, le filtre 42 la couleur verte, le filtre 43 la couleur rouge, etc. pour un nombre quelconque de filtres monochromatiques. Les filtres 51 et 52 sont dits panchromatiques, car ils correspondent à une large fenêtre spectrale de transmission, qui peut comprendre les fenêtres spectrales des filtres monochromatiques 41-43. De préférence, les filtres panchromatiques 51 et 52 sont suffisamment grands pour recouvrir chacun tout le champ optique du capteur d'image. Les références C30-1 et C30-2 correspondent à la limite C30 pour deux positions de la roue 4, pour chacune desquelles le filtre panchromatique 51 ou 52, respectivement, est actif pour toute l'image qui est saisie par le capteur lors d'une même séquence d'acquisition. Possiblement, un unique filtre panchromatique peut être prévu dans la roue 4. Une méthode avantageuse d'obtention d'images ou de vidéo en couleurs, en utilisant un tel appareil, peut alors comprendre les étapes suivantes :
/1/ la roue 4 est d'abord immobilisée dans la position C30-1, et le pointage de l'axe optique Z-Z vers une zone cible à la surface de la Terre peut alors être stabilisé, par exemple pendant une dizaine de secondes ;
/2/ puis on fait tourner continûment la roue 4 de sorte que les filtres monochromatiques 41-43 défilent devant le capteur d'image, de préférence sans dépasser la vitesse maximale qui est définie par la largeur angulaire de chaque filtre afin que chaque élément photosensible du capteur puisse effectuer une séquence complète d'acquisition pour chacun des filtres 41-43. Le capteur d'image effectue alors plusieurs séquences d'acquisition enchaînées pendant que la roue 4 tourne ;
/3/ la roue 4 est arrêtée dans la position C30-2, et une acquisition de la zone cible en vidéo est effectuée pendant une durée d'observation souhaitée, par exemple d'au moins 10 minutes ; puis
/4/ les images spectrales qui ont été saisies à l'étape /2/ sont utilisées pour coloriser l'image panchromatique qui a été saisie à l'étape /3/.

Dans le cas d'une surveillance en temps réel, il est nécessaire de disposer de l'acquisition des couleurs avant la vidéo : l'étape /2/ est exécutée avant l'étape /3/. Par contre, si la visualisation en temps réel n'est pas impérative, l'acquisition des couleurs peut être réalisée après celle de la vidéo : l'étape /2/ peut être exécutée entre les étapes /3/ et /4/. La stabilisation du pointage peut également être omise dans ce dernier cas. De façon générale pour un tel procédé de surveillance par vidéo avec couleurs, les rotations de la roue 4 qui sont réalisées pour les étapes /1/ à /3/ peuvent être dans un sens constant, ou avec des allers-retours alternés.

Il est entendu que l'invention peut être reproduite en l'adaptant par rapport aux modes de réalisation qui viennent d'être décrits et tels que définis par les revendications 1 à 16. En particulier, les adaptations suivantes peuvent être mises en œuvre :
- chaque filtre peut avoir une forme quelconque ;
- les filtres peuvent être proches deux-à-deux dans la roue de sorte que plusieurs filtres soient toujours simultanément dans le champ optique du capteur d'image ;
- les filtres ne peuvent occuper qu'une partie réduite de la roue, et la partie complémentaire de la roue peut être dédiée à une fonction autre que le filtrage spectral ;
- la roue à filtres peut être située juste devant le capteur d'image, puisque la surface photosensible de ce dernier est située au niveau du plan focal de l'optique de formation d'image, qui est un plan de focalisation du faisceau lumineux. Dans ce cas, il n'est pas nécessaire que l'optique comprenne un système de ré-imagerie ;
- l'invention peut être appliquée à des filtres qui sont efficaces dans des domaines spectraux quelconques, ainsi qu'à un nombre quelconque de filtres différents. Notamment, elle peut être avantageuse pour le cas de filtres de deux types seulement, qui sont alternés dans la roue sous forme de secteurs angulaires étroits. En effet, l'obtention de tels filtres étroits avec une qualité imposée est facilitée par la réduction de la surface individuelle de chaque filtre ; et
- enfin, l'invention est compatible avec des capteurs d'image matriciels qui sont disponibles commercialement. Par exemple, pour une application aéroportée, notamment lorsque l'appareil est embarqué à bord d'un drone, un capteur matriciel rapide, c'est-à-dire qui est capable de saisir des images à une fréquence de 120 Hz (hertz) ou plus, peut fournir au moins dix images multispectrales par seconde dans le cas d'une dizaine de bandes spectrales.

## Revendications

1. Appareil de saisie d'images multispectrales (10), comprenant :
- une optique de formation d'image (1, 2), adaptée pour former une image dans un plan focal (PF) ;
- au moins un capteur d'image bidimensionnel (3), comportant une surface photosensible limitée par un contour périphérique (C3), et située dans le plan focal (PF) ;
- une roue (4) comportant une pluralité de filtres spectraux (41-46), agencée pour maintenir les dits filtres parallèlement à et à proximité du plan focal (PF) ou d'un plan d'image intermédiaire (PI) de l'optique de formation d'image (1, 2) ; et
- un système d'entraînement (5), agencé pour faire tourner la roue (4) autour d'un axe de rotation (A-A) de façon à amener chacun des filtres (41-46) dans le faisceau lumineux (F) ;
dans lequel un au moins des filtres (41-46), appelé filtre à secteur angulaire étroit, possède une extension angulaire qui est inférieure à une extension angulaire de la surface photosensible du capteur d'image (3) lorsque les filtres sont à proximité du plan focal (PF), ou qui est inférieure à une extension angulaire d'une portion (30) du plan d'image intermédiaire (PI) qui est conjuguée optiquement avec la surface photosensible entière par une partie ré-imageante (2) de l'optique de formation d'image, les extensions angulaires étant mesurées par rapport à l'axe de rotation (A-A) de la roue (4),
le système d'entraînement (5) étant adapté pour faire tourner la roue (4) continûment pendant que plusieurs images sont successivement saisies par le capteur d'image (3) ;
l'appareil étant configuré tel que ledit capteur d'image (3) comporte une pluralité d'éléments photosensibles (31) séparés et adaptés pour fonctionner chacun selon une séquence d'acquisition qui comprend successivement au moins une phase d'accumulation de signal et une phase de lecture d'un signal accumulé ;
et **caractérisé en ce que** l'appareil est adapté de sorte qu'il possède un fonctionnement de saisie d'images pour lequel la roue est entraînée continûment en rotation par le système d'entraînement (5) pendant que plusieurs images sont successivement saisies par le capteur d'image (3), et pour lequel un angle de rotation qui est parcouru par la roue (4) pendant une somme d'une durée totale de la séquence d'acquisition et d'une durée de phase d'accumulation supplémentaire soit tel que l'extension angulaire du filtre à secteur angulaire étroit soit supérieure audit angle de rotation.

2. Appareil selon la revendication 1, dans lequel le filtre à secteur angulaire étroit est situé dans la roue (4) entre deux autres des filtres, et proche des dits deux autres filtres de sorte que pour toute position de la roue autour de l'axe de rotation (A-A) telle qu'une portion au moins du filtre à secteur angulaire étroit soit efficace pour une partie de l'image contenue à l'intérieur du contour périphérique (C3) de la surface photosensible du capteur d'image (3), une portion de l'un au moins des dits deux autres filtres est simultanément efficace pour une autre partie de la même image contenue à l'intérieur du contour périphérique de la surface photosensible.

3. Appareil selon la revendication 2, dans lequel l'extension angulaire du filtre à secteur angulaire étroit et des extensions angulaires respectives des dits deux autres filtres sont telles que pour au moins une position de la roue (4) autour de l'axe de rotation (A-A), des portions respectives du filtre à secteur angulaire étroit et des dits deux autres filtres sont simultanément efficaces pour trois parties séparées de l'image contenue à l'intérieur du contour périphérique (C3) de la surface photosensible.

4. Appareil selon la revendication 2 ou 3, dans lequel des extensions angulaires respectives du filtre à secteur angulaire étroit et des dits deux autres filtres, par rapport à l'axe de rotation (A-A) de la roue (4) et pour une même distance radiale à partir dudit axe de rotation, sont égales.

5. Appareil selon l'une quelconque des revendications précédentes, dans lequel le filtre à secteur angulaire étroit possède deux bords rectilignes qui s'étendent chacun radialement par rapport à l'axe de rotation (A-A) de la roue (4).

6. Appareil selon l'une quelconque des revendications précédentes, dans lequel la roue (4) est pourvue d'au moins trois filtres (41-46) correspondant respectivement à trois fenêtres spectrales de filtrage qui sont différentes.

7. Appareil selon la revendication 6 prise ensemble avec la revendication 3 ou 4, dans lequel les trois filtres qui correspondent respectivement aux trois fenêtres spectrales de filtrage qui sont différentes, sont le filtre à secteur angulaire étroit et les dits deux autres filtres, et la roue (4) comporte au moins un filtre spectral supplémentaire (51) possédant une fenêtre spectrale qui comprend les fenêtres spectrales du filtre à secteur angulaire étroit et des dits deux autres filtres,
et ledit filtre spectral supplémentaire possède lui-même une extension angulaire qui est supérieure à l'extension angulaire de la surface photosensible du capteur d'image (3) lorsque les filtres sont à proximité du plan focal (PF), ou qui est supérieure à l'extension angulaire de la portion (30) du plan d'image intermédiaire (PI) qui est conjuguée optiquement avec la surface photosensible entière par la partie ré-imageante (2) de l'optique de formation d'image, l'extension angulaire du filtre spectral supplémentaire étant aussi mesurée par rapport à l'axe de rotation (A-A) de la roue (4).

8. Appareil selon l'une quelconque des revendications précédentes, dans lequel les filtres (41-45) constituent plusieurs groupes identiques, et les filtres d'un même groupe sont tous voisins dans la roue (4) de sorte que chaque groupe de filtres soit rassemblé dans un secteur de la roue sans intercalation d'un filtre qui appartiendrait à un autre groupe.

9. Appareil selon l'une quelconque des revendications précédentes, comprenant en outre un système de repérage de la position de la roue (4) autour de l'axe de rotation (A-A).

10. Appareil selon l'une quelconque des revendications précédentes, dans lequel la roue (4) comporte un motif (40) entre deux des filtres (41-46) qui sont voisins dans ladite roue, de sorte qu'une position dudit motif apparaisse dans une image qui est saisie alors que des portions respectives des dits deux filtres voisins sont simultanément efficaces pour des parties séparées de l'image contenue à l'intérieur du contour périphérique de la surface photosensible du capteur d'image (3).

11. Appareil selon l'une quelconque des revendications précédentes, dans lequel le système d'entraînement (5) et un contrôleur du capteur d'image (3) sont adaptés de sorte que deux images qui sont saisies successivement par le capteur présentent un recouvrement entre des parties respectives des dites images qui sont saisies à travers un même des filtres (41-46).

12. Appareil selon l'une quelconque des revendications précédentes, comprenant en outre :
- une unité de reconstruction d'images spectrales, adaptée pour produire des images spectrales qui correspondent chacune à la surface photosensible entière du capteur d'image (3), chaque image spectrale étant produite comme une juxtaposition de portions d'images saisies par le capteur d'image à travers un même des filtres (41-46) lors d'au moins deux expositions différentes, avec une rotation de la roue (4) entre les dites expositions.

13. Appareil selon l'une quelconque des revendications précédentes, adapté pour être embarqué à bord d'un aéronef, d'un véhicule spatial ou d'un satellite (11).

14. Procédé de collecte d'une image multispectrale, comprenant de recevoir à une station (12) installée sur Terre (T), des données d'images (D) relatives à des images saisies par un appareil (10) selon la revendication 13, ledit appareil étant à bord de l'aéronef en vol, du véhicule spatial situé dans l'espace ou du satellite (11) en orbite lorsque les images sont saisies, et les dites données d'images étant transmises par rayonnement électromagnétique ou par signaux laser à partir dudit aéronef, véhicule spatial ou satellite à la station sur Terre, directement ou par l'intermédiaire d'un satellite de relais.

15. Procédé selon la revendication 14, comprenant une étape de reconstruction d'images spectrales formant ensemble ladite image multispectrale, pendant laquelle chaque image spectrale correspondant à la surface photosensible entière du capteur d'image (3), est produite comme une juxtaposition de parties d'images saisies par le capteur d'image à travers un même des filtres (41-46) lors d'au moins deux expositions différentes, avec une rotation de la roue (4) entre les dites expositions, ladite étape de reconstruction étant réalisée sur Terre (T) à partir des données d'images (D) reçues à la station (12).

16. Procédé selon la revendication 15, suivant lequel l'appareil de saisie d'image multispectrales (10) est conforme à la revendication 7, et le procédé comprend en outre une étape de colorisation lors de laquelle des images spectrales saisies respectivement à travers le filtre à secteur angulaire étroit et les dits deux autres filtres sont combinées avec une image saisie avec le filtre spectral supplémentaire (51), afin d'obtenir une image enrichie qui possède une information spectrale visible pour un observateur de ladite image enrichie.

## Patentansprüche

1. Vorrichtung zur Erfassung multispektraler Bilder (10), umfassend:
- eine Bilderzeugungsoptik (1, 2), die dazu ausgelegt ist, in einer Brennebene (PF) ein Bild zu erzeugen;
- mindestens einen zweidimensionalen Bildsensor (3), der eine lichtempfindliche Oberfläche umfasst, die durch eine Umfangskontur (C3) begrenzt wird und in der Brennebene (PF) angeordnet ist;
- ein Rad (4), das mehrere Spektralfilter (41-46) umfasst, das dazu eingerichtet ist, die Filter parallel zu und in der Nähe der Brennebene (PF) oder einer Zwischenbildebene (PI) der Bilderzeugungsoptik (1, 2) zu halten; und
- ein Antriebssystem (5), das dazu eingerichtet ist, das Rad (4) um eine Drehachse (A-A) zu drehen, um jedes der Filter (41-46) in den Lichtstrahl (F) zu bringen;
wobei mindestens eines der Filter (41-46), das als Filter mit schmalem Winkelbereich bezeichnet wird, eine Winkelerstreckung aufweist, die kleiner ist als eine Winkelerstreckung der lichtempfindlichen Oberfläche des Bildsensors (3), wenn die Filter sich in der Nähe der Brennebene (PF) befinden, oder die kleiner ist als eine Winkelerstreckung eines Abschnitts (30) der Zwischenbildebene (PI), der durch einen wiederabbildenden Teil (2) der Bilderzeugungsoptik optisch mit der gesamten lichtempfindlichen Oberfläche konjugiert ist, wobei die Winkelerstreckungen in Bezug auf die Drehachse (A-A) des Rads (4) gemessen werden,
wobei das Antriebssystem (5) dazu ausgelegt ist, das Rad (4) kontinuierlich zu drehen, während nacheinander mehrere Bilder von dem Bildsensor (3) erfasst werden;
wobei die Vorrichtung derart ausgestaltet ist, dass der Bildsensor (3) mehrere lichtempfindliche Elemente (31) umfasst, die getrennt und jeweils für den Betrieb gemäß einer Erfassungssequenz ausgelegt sind, die nacheinander mindestens eine Signalakkumulationsphase und eine Lesephase eines akkumulierten Signals umfasst;
und **dadurch gekennzeichnet, dass** die Vorrichtung derart ausgelegt ist, dass sie einen Betrieb zur Bilderfassung aufweist, bei dem das Rad von dem Antriebssystem (5) kontinuierlich gedreht wird, während nacheinander mehrere Bilder von dem Bildsensor (3) erfasst werden, und bei dem ein Drehwinkel, der während einer Summe einer Gesamtdauer der Erfassungssequenz und einer Dauer einer zusätzlichen Akkumulationsphase von dem Rad (4) zurückgelegt wird, derart ist, dass die Winkelerstreckung des Filters mit schmalem Winkelbereich größer ist als der Drehwinkel.

2. Vorrichtung nach Anspruch 1, wobei das Filter mit schmalem Winkelbereich in dem Rad (4) zwischen zwei anderen der Filter und nahe den zwei anderen Filtern angeordnet ist, sodass für jede Stellung des Rads um die Drehachse (A-A) derart, dass mindestens ein Abschnitt des Filters mit schmalem Winkelbereich für einen Teil des Bilds wirksam ist, das innerhalb der Umfangskontur (C3) der lichtempfindlichen Oberfläche des Bildsensors (3) enthalten ist, ein Abschnitt mindestens eines der zwei anderen Filter gleichzeitig für einen anderen Teil desselben Bilds wirksam ist, das innerhalb der Umfangskontur der lichtempfindlichen Oberfläche enthalten ist.

3. Vorrichtung nach Anspruch 2, wobei die Winkelerstreckung des Filters mit schmalem Winkelbereich und jeweilige Winkelerstreckungen der zwei anderen Filter derart sind, dass für mindestens eine Stellung des Rads (4) um die Drehachse (A-A) jeweilige Abschnitte des Filters mit schmalem Winkelbereich und der zwei anderen Filter gleichzeitig für drei getrennte Teile des Bilds wirksam sind, das innerhalb der Umfangskontur (C3) der lichtempfindlichen Oberfläche enthalten ist.

4. Vorrichtung nach Anspruch 2 oder 3, wobei jeweilige Winkelerstreckungen des Filters mit schmalem Winkelbereich und der zwei anderen Filter, in Bezug auf die Drehachse (A-A) des Rads (4) und für einen gleichen Radialabstand von der Drehachse, gleich sind.

5. Vorrichtung nach einem der vorhergehenden Ansprüche, wobei das Filter mit schmalem Winkelbereich zwei geradlinige Kanten aufweist, die sich jeweils radial in Bezug auf die Drehachse (A-A) des Rads (4) erstrecken.

6. Vorrichtung nach einem der vorhergehenden Ansprüche, wobei das Rad (4) mit mindestens drei Filtern (41-46) versehen ist, die jeweils drei Spektralfenstern zur Filterung entsprechen, die unterschiedlich sind.

7. Vorrichtung nach Anspruch 6 zusammen mit Anspruch 3 oder 4, wobei die drei Filter, die jeweils den drei Spektralfenstern zur Filterung entsprechen, die unterschiedlich sind, das Filter mit schmalem Winkelbereich und die zwei anderen Filter sind, und das Rad (4) mindestens ein zusätzliches Spektralfilter (51) umfasst, das ein Spektralfenster aufweist, das die Spektralfenster des Filters mit schmalem Winkelbereich und der zwei anderen Filter umfasst,
und das zusätzliche Spektralfilter selbst eine Winkelerstreckung aufweist, die größer ist als die Winkelerstreckung der lichtempfindlichen Oberfläche des Bildsensors (3), wenn sich die Filter in der Nähe der Brennebene (PF) befinden, oder die größer ist als die Winkelerstreckung des Abschnitts (30) der Zwischenbildebene (PI), der durch den wiederabbildenden Teil (2) der Bilderzeugungsoptik optisch mit der gesamten lichtempfindlichen Oberfläche konjugiert ist, wobei die Winkelerstreckung des Spektralfilters ebenfalls in Bezug auf die Drehachse (A-A) des Rads (4) gemessen wird.

8. Vorrichtung nach einem der vorhergehenden Ansprüche, wobei die Filter (41-45) mehrere identische Gruppen bilden und die Filter einer selben Gruppe alle in dem Rad (4) benachbart sind, derart, dass jede Filtergruppe ohne Zwischenschaltung eines Filters, der einer anderen Gruppe angehören würde, in einem Bereich des Rads zusammengestellt ist.

9. Vorrichtung nach einem der vorhergehenden Ansprüche, ferner umfassend ein System zur Markierung der Stellung des Rads (4) um die Drehachse (A-A).

10. Vorrichtung nach einem der vorhergehenden Ansprüche, wobei das Rad (4) ein Motiv (40) zwischen zwei der Filter (41-46) umfasst, die in dem Rad benachbart sind, sodass eine Position des Motivs in einem Bild erscheint, das erfasst wird, während jeweilige Abschnitte der zwei benachbarten Filter gleichzeitig für getrennte Teile des Bilds wirksam sind, das innerhalb der Umfangskontur der lichtempfindlichen Oberfläche des Bildsensors (3) enthalten ist.

11. Vorrichtung nach einem der vorhergehenden Ansprüche, wobei das Antriebssystem (5) und eine Steuerung des Bildsensors (3) derart ausgelegt sind, dass zwei Bilder, die nacheinander von dem Sensor erfasst werden, zwischen jeweiligen Teilen der Bilder, die durch ein selbes der Filter (41-46) erfasst werden, eine Überlappung aufweisen.

12. Vorrichtung nach einem der vorhergehenden Ansprüche, die ferner Folgendes umfasst:
- eine Einheit zur Rekonstruktion von Spektralbildern, die dazu ausgelegt ist, Spektralbilder zu erzeugen, die jeweils der gesamten lichtempfindlichen Oberfläche des Bildsensors (3) entsprechen, wobei jedes Spektralbild als eine Nebeneinanderstellung von Abschnitten von Bildern erzeugt wird, die von dem Bildsensor bei mindestens zwei unterschiedlichen Belichtungen, mit einer Drehung des Rads (4) zwischen den Belichtungen, durch ein selbes der Filter (41-46) erfasst werden.

13. Vorrichtung nach einem der vorhergehenden Ansprüche, die dazu ausgelegt ist, an Bord eines Luftfahrzeugs, eines Raumfahrzeugs oder eines Satelliten (11) genommen zu werden.

14. Verfahren zur Zusammenstellung eines multispektralen Bilds, welches das Empfangen an einer Station (12), die auf der Erde (T) installiert ist, von Bilddaten (D) von Bildern umfasst, die von einer Vorrichtung (10) nach Anspruch 13 erfasst werden, wobei die Vorrichtung, wenn die Bilder erfasst werden, an Bord des Luftfahrzeugs im Flug, des Raumfahrzeugs, das sich im Weltraum befindet, oder des Satelliten (11) im Orbit ist, und die Bilddaten, direkt oder mittels eines Relaissatelliten, durch elektromagnetische Strahlung oder durch Lasersignale von dem Luftfahrzeug, dem Raumfahrzeug oder dem Satelliten an die Station auf der Erde übertragen werden.

15. Verfahren nach Anspruch 14, das einen Schritt der Rekonstruktion von Spektralbildern umfasst, die zusammen das multispektrale Bild bilden, in dem jedes Spektralbild, das der gesamten lichtempfindlichen Oberfläche des Bildsensors (3) entspricht, als eine Nebeneinanderstellung von Teilen von Bildern erzeugt wird, die von dem Bildsensor bei mindestens zwei unterschiedlichen Belichtungen, mit einer Drehung des Rads (4) zwischen den Belichtungen, durch ein selbes der Filter (41-46) erfasst werden, wobei der Schritt der Rekonstruktion anhand von Bilddaten (D), die an der Station (12) empfangen werden, auf der Erde (T) durchgeführt wird.

16. Verfahren nach Anspruch 15, wobei die Vorrichtung zur Erfassung multispektraler Bilder (10) Anspruch 7 entspricht und das Verfahren ferner einen Schritt der Färbung umfasst, in dem Spektralbilder, die jeweils durch das Filter mit schmalem Winkelbereich und die zwei anderen Filter erfasst werden, mit einem Bild kombiniert werden, das mit dem zusätzlichen Spektralfilter (51) erfasst wird, um ein erweitertes Bild zu erhalten, das eine Spektralinformation aufweist, die für einen Betrachter aus dem erweiterten Bild zu erkennen ist.

## Claims

1. Multispectral image capture device (10), comprising:
- an image-forming optical system (1, 2), suitable for forming an image in a focal plane (FP);
- at least one two-dimensional image sensor (3), comprising a photosensitive surface limited by a peripheral contour (C3), and situated in the focal plane (FP);
- a wheel (4) that comprises a plurality of spectral filters (41-46), arranged in order to keep said filters parallel and close to the focal plane (FP) or to an intermediate image plane (IP) of the image-forming optical system (1, 2); and
- a drive system (5), arranged in order to rotate the wheel (4) about an axis of rotation (A-A) so as to bring each of the filters (41-46) into the light beam (L);
wherein at least one of the filters (41-46), called filter having a narrow angular sector, has an angular extension that is less than an angular extension of the photosensitive surface of the image sensor (3) when the filters are close to the focal plane (FP), or that is less than an angular extension of a portion (30) of the intermediate image plane (IP) that is optically conjugated with the entire photosensitive surface by a re-imaging part (2) of the image-forming optical system, the angular extensions being measured with respect to the axis of rotation (A-A) of the wheel (4),
the drive system (5) being adapted in order to rotate the wheel (4) continuously while several images are captured successively by the image sensor (3);
the device being configured such that said image sensor (3) comprises a plurality of separate photosensitive pixels (31) adapted to operate each according to an acquisition sequence that comprises successively at least one phase of signal accumulation and one phase of reading an accumulated signal;
and **characterized in that** the device is adapted so that it has an image capturing operation where the wheel is continuously rotated by the drive system (5) while several images are captured successively by the image sensor (3), and for which a rotation angle which is covered by the wheel (4) during a sum of a total period of the acquisition sequence and a period of an additional accumulation phase is such that the angular extension of the filter having a narrow angular sector is greater than said angle of rotation covered by the wheel.

2. Device according to claim 1, wherein the filter having a narrow angular sector is situated in the wheel (4) between two other filters, and close to said other two filters so that for any position of the wheel about the axis of rotation (A-A) such that at least a portion of the filter having a narrow angular sector is effective for part of the image contained within the peripheral contour (C3) of the photosensitive surface of the image sensor (3), a portion of at least one of said other two filters is simultaneously effective for another part of the same image contained within the peripheral contour of the photosensitive surface.

3. Device according to claim 2, wherein the angular extension of the filter having a narrow angular sector and respective angular extensions of said other two filters are such that for at least one position of the wheel (4) about the axis of rotation (A-A), respective portions of the filter having a narrow angular sector and of said other two filters are simultaneously effective for three separate parts of the image contained within the peripheral contour (C3) of the photosensitive surface.

4. Device according to claim 2 or 3, wherein respective angular extensions of the filter having a narrow angular sector and of said other two filters, with respect to the axis of rotation (A-A) of the wheel (4) and for one same radial distance from said axis of rotation, are equal.

5. Device according to any one of the preceding claims, wherein the filter having a narrow angular sector has two straight edges each extending radially with respect to the axis of rotation (A-A) of the wheel (4).

6. Device according to any one of the preceding claims, wherein the wheel (4) is provided with at least three filters (41-46) corresponding respectively to three different spectral filter windows.

7. Device according to claim 6 taken together with claim 3 or 4, wherein the three filters that correspond respectively to the three different spectral filter windows, are the filter having a narrow angular sector and said other two filters, and the wheel (4) comprises at least one additional spectral filter (51) having a spectral window that comprises the spectral windows of the filter having a narrow angular sector and of said other two filters,
and said additional spectral filter itself has an angular extension that is greater than the angular extension of the photosensitive surface of the image sensor (3) when the filters are close to the focal plane (FP), or that is greater than the angular extension of the portion (30) of the intermediate image plane (IP) that is optically conjugated with the entire photosensitive surface by the re-imaging part (2) of the image-forming optical system, the angular extension of the additional spectral filter also being measured with respect to the axis of rotation (A-A) of the wheel (4).

8. Device according to any one of the preceding claims, wherein the filters (41-45) constitute several identical groups, and the filters of one same group are all adjacent in the wheel (4) so that each group of filters is contained in a sector of the wheel without intercalation of any filter that belongs to another group.

9. Device according to any one of the preceding claims, also comprising a system for referencing the position of the wheel (4) about the axis of rotation (A-A).

10. Device according to any one of the preceding claims, wherein the wheel (4) comprises a pattern (40) between two of the filters (41-46) that are adjacent in said wheel, so that a position of said pattern appears in a captured image while respective portions of said two adjacent filters are simultaneously effective for separate parts of the image contained within the peripheral contour of the photosensitive surface of the image sensor (3).

11. Device according to any one of the preceding claims, wherein the drive system (5) and a controller of the image sensor (3) are adapted so that two images that are captured successively by the sensor have an overlap between respective parts of said images that are captured through a same one of the filters (41-46).

12. Device according to any one of the preceding claims, also comprising:
- a unit for reconstruction of spectral images, adapted to produce spectral images that each correspond to the entire photosensitive surface of the image sensor (3), each spectral image being produced as a juxtaposition of portions of images captured by the image sensor through a same one of the filters (41-46) during at least two different exposures, with a rotation of the wheel (4) between said exposures.

13. Device according to any one of the preceding claims, adapted to be carried on board an aircraft, a space vehicle or a satellite (11).

14. Method for collecting a multispectral image, comprising receiving, at a station (12) installed on the Earth (E), image data (D) relating to images captured by a device (10) according to claim 13, said device being on board the aircraft in flight, the space vehicle situated in space or the satellite (11) in orbit when the images are captured, and said image data being transmitted by electromagnetic radiation or by laser signals from said aircraft, space vehicle or satellite to the station on the Earth, directly or via a relay satellite.

15. Method according to claim 14, comprising a step of reconstructing spectral images that form together said multispectral image, during which each spectral image corresponding to the entire photosensitive surface of the image sensor (3), is produced as a juxtaposition of parts of images captured by the image sensor through a same one of the filters (41-46) during at least two different exposures, with a rotation of the wheel (4) between said exposures, said reconstruction step being carried out on the Earth (E) from the image data (D) received at the station (12).

16. Method according to claim 15, wherein the multispectral image capture device (10) is in accordance with claim 7, and the method also comprises a colourization step during which spectral images captured respectively through the filter having a narrow angular sector and said other two filters are combined with an image captured with the additional spectral filter (51), in order to obtain an enriched image that has spectral information that can be viewed by an observer of said enriched image.
